# EUROPEAN PATENT APPLICATION

(11) **EP 2 230 104 A1**
(43) Date of publication of application: **22.09.2010**
(21) Application number: 10156230.4
(22) Date of filing: 11.03.2010
(51) Int. Cl.: B60C 11/13

(54) **Tire having tread blocks with blended wall-shapes**

(30) Priority: 17.03.2009 US 405267
(71) Applicant: The Goodyear Tire & Rubber Company, Akron, OH 44316-0001 (US)
(72) Inventor: Beha, Daniel Ray, Akron, OH 44313 (US)
(74) Representative: Kutsch, Bernd

(57) **Abstract**

A tread for a pneumatic tire (10) includes a plurality of grooves (44, 46) and a plurality of tread blocks (42) located between the grooves (44, 46). Each of the tread blocks (42) has a road-contacting surface (38) and at least one wall (101) extending from the road-contacting surface (38) so as to border at least one of the grooves (44, 46). The at least one wall (101) having a faceted or zigzag radially outer edge (111, 113) blends or transitions radially inward to a linear or straight base of the tread block (42). The base of the tread block (42) transitions to a base surface (35) of the corresponding groove (44, 46) to define an axially extending and rounded off or concave transition surface therebetween.

## Description

### Field of the Invention

The present invention generally relates to tire treads and, more particularly, to a pneumatic tire tread having tread blocks with blended walls and rounded wall/base transitions.

### Background of the Invention

A conventional tire includes a tread with a tread pattern that, when the tire is loaded, defines a footprint providing a frictional engagement with a road or other contact surface. The tread pattern may be segmented into a plurality of raised blocks defined and separated by intersecting circumferential and transverse grooves. The grooves may provide flexibility and water removal while the blocks may determine control, acceleration, and/or braking characteristics of the tire. The circumferential grooves may be positioned such that the raised blocks are arranged in columns that extend circumferentially about a circumference of the tire.

Block dimensions, number of ribs, and inclination angle of the transverse grooves determine overall performance of the tire. In particular, these factors determine an amount of tread that contacts the road/contact surface, and hence, the traction and control of the vehicle riding on the tire. A nonskid, or groove, depth influences the ability of the intersecting circumferential and transverse grooves to channel water out of the tread.

In a new condition, a tread pattern may be designed with compromises between these and other various design parameters in order to optimize performance of the tire. As a tire wears, the parameter choices that optimized performance of the tire's tread pattern in an unworn state may not continue to be optimal. For example, a new tire construction may be designed with a tread pattern having raised blocks in which noise reduction, due to high nonskid depth, is a controlling factor. However, blocks that provide a balanced tire behavior in a new condition may not exhibit optimized noise reduction and hydroplaning control in a worn condition, as a groove depth diminishes.

As a tread wears, noise created by contact between the road-contacting surfaces of the tread blocks and the road may diminish. However, a worn tire with conventional blocks may be significantly more susceptible to hydroplaning than a new tire.

Accordingly, it would be desirable to have a tire tread that addresses these and other deficiencies of conventional tires by mitigating wear factors, such as stresses and cracking occurring at the outer walls of the tread blocks.

### Summary of the Invention

The invention relates to a tire tread according to claim 1 and to a tire according to claim 15.

Dependent claims refer to preferred embodiments of the invention.

In one aspect of the present invention, the pneumatic tire includes a sidewall extending radially inward from two lateral edges of the tread.

In another aspect of the present invention, the pneumatic tire includes a shoulder defining a juncture between each sidewall and the tread.

In still another aspect of the invention, the carcass includes two bead portions, each having an annular inextensible bead and an apex.

In yet another aspect of the present invention, the carcass includes two sidewalls each terminating at a corresponding bead portion.

In still another aspect of the present invention, the carcass includes at least one composite ply structure having opposite turn-up ply ends, each wrapped about a bead portion.

In yet another aspect of the present invention, the pneumatic tire includes a belt package comprising a plurality of individually cut belt plies.

In still another aspect of the present invention, the plies of the belt package comprise a cord reinforced elastomeric material.

In yet another aspect of the present invention, the pneumatic tire includes an innerliner for providing an air impervious chamber to maintain air pressure when the pneumatic tire is inflated.

In still another aspect of the present invention, the tread includes a plurality of continuous circumferential grooves and a plurality of transverse grooves that intersect with the circumferential grooves to define a lattice arrangement of grooves for the tread.

In yet another aspect of the present invention, the circumferential grooves are substantially parallel to one another so that the tread blocks are arranged in preferably four circumferential ribs extending circumferentially about the pneumatic tire.

In still another aspect of the present invention, the transverse grooves extend between adjacent circumferential grooves.

In yet another aspect of the present invention, the transverse grooves extend between a circumferential groove and a lateral edge of the tread.

In still another aspect of the present invention, the transverse grooves extend across an axial width of the pneumatic tire relative to an equatorial plane of the pneumatic tire.

### Brief Description of the Drawings

The accompanying drawings, which are incorporated in and constitute a part of this specification, illustrate an example embodiment of the present invention and, together with a general description of the present invention given above and the example detailed description given below, serve to explain, but not limit, the present invention.
Fig. 1 is a schematic cross-sectional view of an example tire for use with the present invention;
Fig. 2 is an example perspective view of an example tire tread in accordance with the present invention;
Fig. 3 is a schematic front elevation view of the example tire of Fig. 2;
Fig. 4 is a schematic detailed front elevation view of the example tire of Fig. 2;
Fig. 5 is a schematic section view taken along line 5-5 in Fig. 4; and
Fig. 6 is a schematic perspective view of the example tire of Fig. 2.

### Definitions

"Axial" and "axially" mean the lines or directions that are parallel to the axis of rotation of the tire.
"Circumferential" means circular lines or directions extending along the surface of the sidewall perpendicular to the axial direction.
"Equatorial plane (EP)" means the plane perpendicular to the tire's axis of rotation and passing through the center of its tread.
"Footprint" means the contact patch or area of contact of the tire tread with a flat surface at zero speed and under design load and pressure.
"Groove" means an elongated void area in a tread that may extend circumferentially or laterally about the tread in a straight, curved, or zigzag manner.
"Hydroplaning" refers to a condition wherein a tire in motion loses traction during wet pavement conditions because the tire is not in contact with the surface. The tire is in contact only with a film of liquid on the surface.
"Lateral" means a direction parallel to the axial direction, as in across the width of the tread or crown region.
"Lateral edge" means the axially outermost edge of the tread as defined by a plane parallel to the equatorial plane and intersecting the outer ends of the axially outermost traction lugs at the radial height of the inner tread surface.
"Leading" refers to a portion or part of the tread that contacts the ground first, with respect to a series of such parts or portions, during rotation of the tire in the direction of travel.
"Nonskid" means depth of grooves in a tire tread.
"Normal inflation pressure" refers to the specific design inflation pressure and load assigned by the appropriate standards organization for the service condition for the tire.
"Normal load" refers to the specific design inflation pressure and load assigned by the appropriate standards organization for the service condition for the tire.
"Radial" and "radially" mean directions radially toward or away from the axis of rotation of the tire.
"Rib" means a circumferentially extending strip of rubber on the tread which is defined by at least one circumferential groove.
"Shoulder" means the upper portion of sidewall just below the tread edge.
"Sidewall" means that portion of a tire between the tread and the bead area.
"Tire design load" is the base or reference load assigned to a tire at a specific inflation pressure and service condition; other load-pressure relationships applicable to the tire are based upon that base or reference load.
"Tread" means a molded rubber component which, when bonded to a tire casing, includes that portion of the tire that comes into contact with the road when the tire is normally inflated and under normal load.
"Tread width" means the arc length of the road contacting tread surface in the axial direction, that is, in a plane parallel to the axis of rotation of the tire.

### Detailed Description of an Example Embodiment of the Present Invention

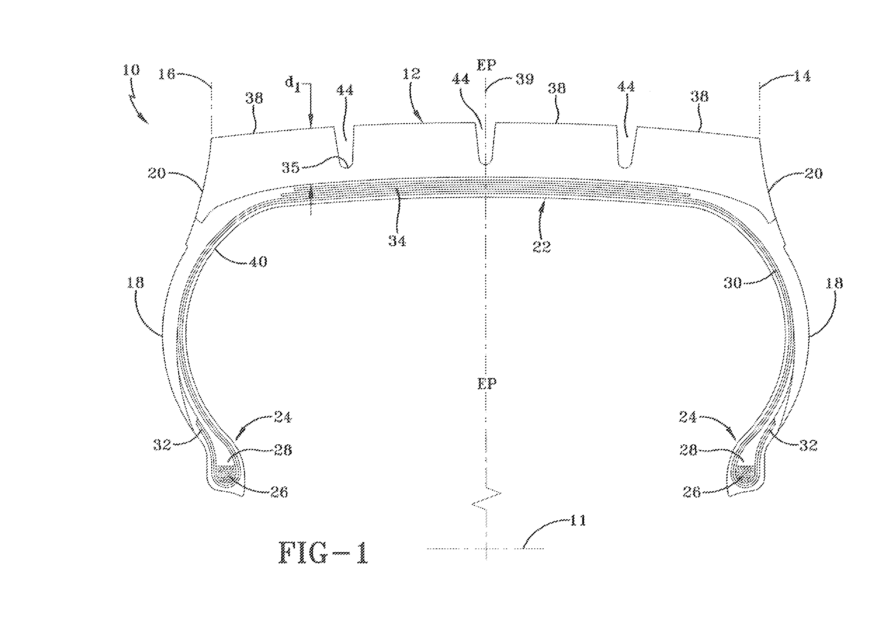

With reference to the Fig. 1, an example pneumatic tire 10 for use with the present invention includes a road-contacting tread 12 extending between lateral edges 14, 16, a sidewall 18 extending from each lateral edge 14, 16, respectively, a shoulder 20 defining a juncture between each sidewall 18 and the tread 12, and a carcass 22 defining a support structure for example tire 10. The tread 12 and sidewalls 18 may be comprised of a suitable material, such as a suitable natural or synthetic rubber compound. The example tire 10 has a mid-circumferential or equatorial plane EP bisecting the tire midway between the lateral edges 14, 16.
The example tire 10 further includes an axis of rotation 11 orthogonally intersecting the equatorial plane EP.

The carcass 22 includes a pair of bead portions 24, each having an annular inextensible bead 26 and an apex 28. Each of the sidewalls 18 terminates at a corresponding one of the bead portions 24, which provide support for the example tire 10 and seal against a rim (not shown) to maintain air pressure in an interior of the example tire. The carcass 22 further includes at least one composite ply structure 30 preferably having opposite turn-up ply ends 32, each wrapped about one of the bead portions 24. The example tire 10 further includes a belt package 34, typically characterized by a plurality of individually cut belt plies and/or spiral wound belt layers. The plies of the ply structure 30 and the belt package 34 generally comprise cord reinforced elastomeric material. Preferably, the cords are steel wire or polyamide filaments. The elastomer material is a vulcanized rubber material. The cord reinforced elastomeric material constituting the ply structure 30 and belt package 34 are preferably encased in, and bonded to, a suitable material, such as a suitable natural or synthetic rubber compound.

When the example tire 10 is mounted on a rim (not shown) and placed on a vehicle, the tread 12 protects the carcass 22 and belt package 34 while providing traction for the vehicle against a road or contact surface. An innerliner 40, which may be formed of halobutyl rubber, defines an essentially air impervious chamber for maintaining the air pressure when the example tire 10 is inflated.

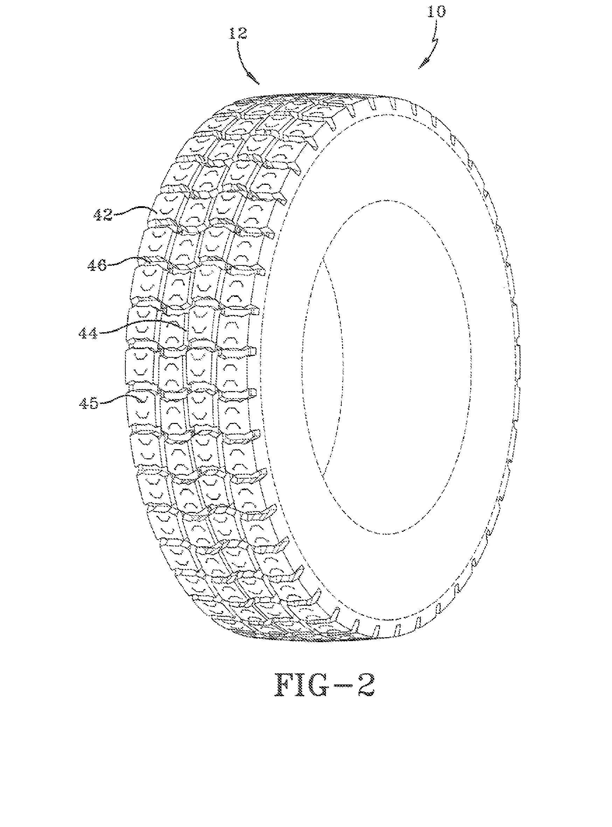

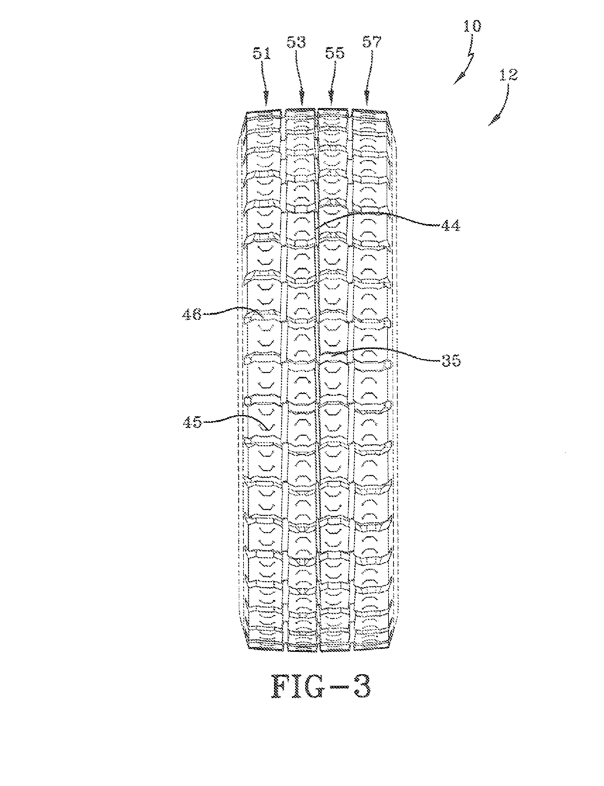

With reference to Figs. 2-5, the example tread 12 is partitioned into a plurality of raised tread blocks 42 located between a plurality of continuous circumferential grooves 44 and a plurality of transverse or lateral grooves 46 that intersect with the circumferential grooves to define a lattice arrangement of grooves for the tread.
The example circumferential grooves 44 are substantially parallel to one another so that the tread blocks 42 are arranged in preferably four circumferential ribs, indicated generally at 51, 53, 55, 57 extending circumferentially about the example tire 10. Adjacent ribs 51, 53, 55, 57 may be separated from each other by one of the plurality of circumferential grooves 44.

Each of the example transverse grooves 46 either extends between adjacent circumferential grooves 44 or between a circumferential groove 44 and one of the lateral edges 14, 16. The transverse grooves 46 extend across an axial width of the example tire 10 relative to the equatorial plane EP. Preferably each block 42 is individually separated from an adjacent block 42 in the same rib 51, 53, 55, 57 by one of the transverse grooves 46.

The circumferential and transverse grooves 44, 46 represent elongated void areas in the example tread 12. The blocks 42 project radially outward from a base surface 35 of the tread 12. The transverse grooves 46 define radially and axially extending block walls 101 of the blocks 42. A nonskid depth d₁ is represented by a distance measured from a road contacting surface 38 of each tread block 42 to the base surface 35. When driving on wet roads, the transverse grooves 44 transfer a continuous flow of water transversely/laterally/axially out of the footprint of the example tread 12 for expulsion through the shoulders 20 of the tread. The presence of the transverse grooves 46 thus may alleviate a build up of water back pressure in a forward location of the rolling tire 10 and thereby facilitate maintaining rubber contact between the tread 12 and the road or contact surface.

Each example tread block 42 includes the radially outermost, contact surface 38 that contacts the road or other surface when periodically within a boundary of the tire footprint as the tire 10 rotates. Each of the tread blocks 42 has a dimension in the circumferential direction of the tire 10 and a dimension in the transverse direction of tire 10 that may be the same or different from the circumferential dimension. Preferably, the tread blocks 42 are provided with sipes 45.

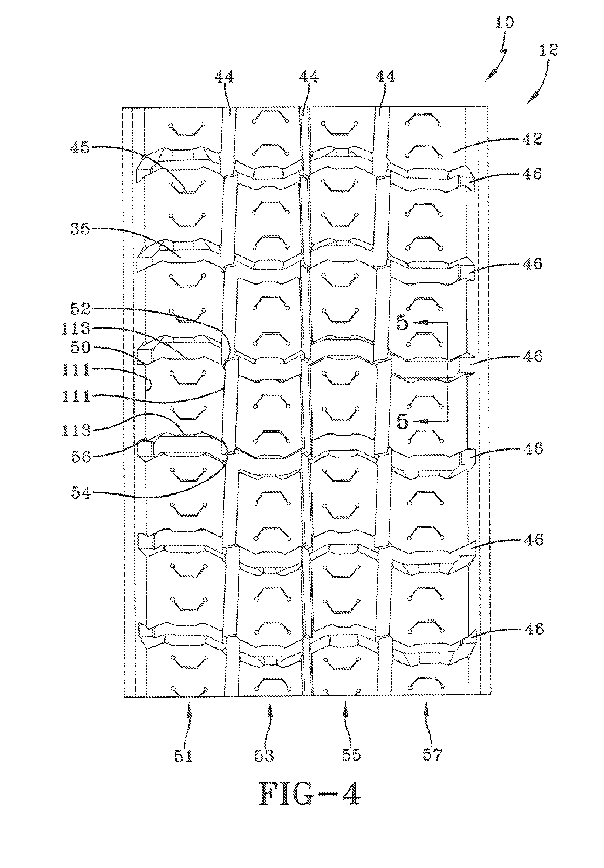

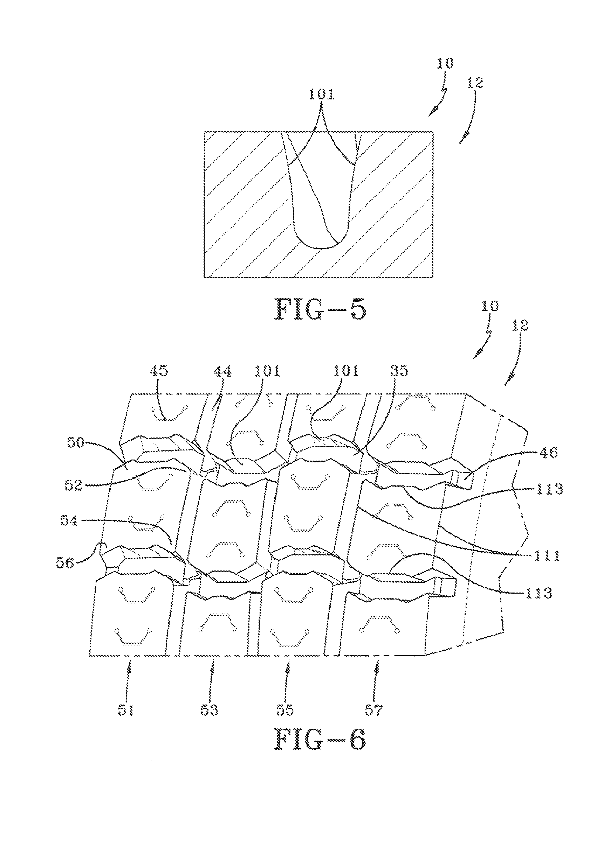

Preferably, each road-contacting surface 38 is bounded by corners 50, 52, 54, 56 defining circumferential edges 111 and transverse edges 113. The circumferential edges 111 of the example tread blocks 42 are linear and extend in the circumferential direction of the tire 10. As shown in Figs. 4 and 5, each of the transverse edges 113 defines the radially outermost edge of the transverse walls 101 of the tread blocks 42. Each pair of transverse edges 113 defines a plurality of linear edges producing faceted or zigzag radially outer transverse edges of the blocks 42.

Further, in accordance with the present invention, as the faceted transverse walls 101 extend radially inward from the faceted transverse edges 113, the transverse walls gradually transition or "blend" into a single planar surface terminating at the base of the tread blocks 42 and the transverse grooves 46 in axially extending, linear surfaces that are also rounded off, or concave, as the walls 101 transition from transverse radially extending walls to the base surface 35 of the transverse grooves 46 of the tread 12.

In use, the depth of grooves 44, 46 will decrease as the tread 12 wears. As the grooves 44, 46 become shallower, the corners 50, 52, 54, 56 approach the base surface 35. As a result, the road-contacting surface 38 is at a different resultant radial height above the base surface 35 and, hence, cuts through a different circumferential plane of the original tread block 42. As this occurs, the faceted shape of the edges 113 changes from zigzag to linear.

The faceting of the zigzag edges113 at the tread surface 38, thus, blends radially inward to a single linear edge to define an axially extending and concave transition surface between the transverse wall 101 and the base surface 35. This allows the dissipation of stresses that form at the base of the transverse walls 101. By virtue of the foregoing, there is provided an improved pneumatic tire that addresses various deficiencies of conventional pneumatic tires.

## Claims

1. A tread for a tire, the tread (12) including a plurality of grooves (44, 46) and a plurality of tread blocks (42) located between the grooves (44, 46), each of the tread blocks (42) having a road-contacting surface (38) and at least one wall (101) extending from the road-contacting surface (38) so as to border at least one of the grooves (44, 46), the at least one wall (101) having a faceted or zigzag radially outer edge (111, 113) blending or transitioning radially inward to a linear or straight base of the tread block (42), the base of the tread block (42) transitioning to a base surface (35) of the corresponding groove (44, 46) to define an axially extending and rounded off or concave transition surface therebetween.

2. The tread as set forth in claim 1 wherein the tread (12) includes a plurality of continuous circumferential grooves (44) and a plurality of transverse or axially oriented grooves (46) that intersect with the circumferential grooves (44) to define a lattice arrangement of grooves (44, 46) for the tread (12).

3. The tread as set forth in claim 1 or 2 wherein the tread (12) includes a plurality of continuous circumferential grooves (44) and a plurality of transverse or axially oriented grooves (46) that intersect with the circumferential grooves (44), wherein the circumferential grooves (44) are substantially parallel to one another, and wherein the tread blocks (42) are arranged in circumferential ribs.

4. The tread as set forth in claim 3 wherein the tread blocks (42) are arranged in four circumferential ribs.

5. The tread as set forth in at least one of the previous claims wherein the transverse or axially oriented grooves (46) extend across the total axial width of the tread (12).

6. The tread as set forth in at least one of the previous claims wherein each road-contacting surface (38) of each tread block (42) is bounded by preferably four corners (50, 52, 54, 56) defining circumferential edges (111) and transverse or axially oriented edges (113), wherein the circumferential edges (111) of the tread blocks (42) are linear or straight and extend in the circumferential direction of the tread (12).

7. The tread as set forth in claim 6 wherein the circumferential edges (111) of circumferentially adjacent the tread blocks (42) are aligned.

8. The tread as set forth in claim 6 or 7 wherein the circumferential edges (111) of the tread blocks (42) are inclined, preferably 2-10 degrees inclined, with regard to the line where the equatorial plane (EP) crosses the center of tread (12).

9. The tread as set forth in at least one of the previous claims wherein each road-contacting surface (38) of each tread block (42) is bounded by preferably four corners (50, 52, 54, 56) defining circumferential edges (111) and transverse or axially oriented edges (113), wherein each of the transverse or axially oriented edges (113) defines the radially outermost edge of the walls (101) having the faceted or zigzag radially outer edge of the tread blocks (42).

10. The tread as set forth in at least one of the previous claims wherein each pair of transverse or axially oriented edges (113) comprises a plurality of linear edges producing the faceted or zigzag radially outer edges of the tread blocks (42).

11. The tread as set forth in at least one of the previous claims wherein each pair of transverse or axially oriented edges (113) in circumferentially adjacent tread blocks (42) in the same circumferential rib has a complementary or substantially complementary edge structure.

12. The tread as set forth in claim 11 each pair of transverse or axially oriented edges (113) in circumferentially adjacent tread blocks (42) in the same circumferential rib has a complementary or substantially complementary concave/convex edge structure.

13. The tread as set forth in at least one of the previous claims wherein the transverse or axially oriented edges (113) in laterally or axially adjacent tread blocks (42) substantially follow a wavy or zigzag line across the total tread width; and/or wherein the transverse or axially oriented grooves (46) on at least one side of the laterally or axially adjacent tread blocks (42) substantially follow a wavy or zigzag line across the total tread width.

14. The tread as set forth in at least one of the previous claims wherein, as the walls (101) extend radially inward from the faceted or zigzag radially outer edges, at least the walls (101) oriented in transverse or axial direction gradually transition or blend into a single planar surface terminating at the base of the tread blocks (42), and wherein the corresponding grooves (46) in transverse or axially extending, linear surfaces are rounded off or concave as the walls (101) oriented in transverse or axial direction transition from radially extending walls to the base surface (35) of the transverse grooves (46) of the tread (12).

15. A pneumatic tire comprising a carcass (22) having an axis of rotation (11) and a tread (12) disposed radially outward of the carcass, wherein the tread is a tread according to at least one of the previous claims
